# EUROPÄISCHE PATENTSCHRIFT

(11) **EP 2 718 212 B1**
(45) Veröffentlichungstag und Bekanntmachung des Hinweises auf die Patenterteilung: **05.07.2017**
(21) Anmeldenummer: 12733403.5
(22) Anmeldetag: 28.03.2012
(51) Int. Cl.: B65H 3/08

(54) **ENDEFFEKTOR**
END EFFECTOR
ACTIONNEUR FINAL

(30) Priorität: 07.06.2011 DE 102011106214
(43) Veröffentlichungstag der Anmeldung: 16.04.2014
(73) Patentinhaber: Broetje-Automation GmbH, 26180 Rastede (DE)
(72) Erfinder: REINHOLD, Raphael, 25409 Wittmund (DE); JUNG, Eike, 27801 Neerstedt (DE)
(74) Vertreter: Gottschald, Jan
(86) Internationale Anmeldenummer: PCT/EP2012/001347
(87) Internationale Veröffentlichungsnummer: WO 2012/167853

(56) Entgegenhaltungen:
- DE-A1- 4 210 024
- US-A- 4 793 657

## Beschreibung

Die Erfindung betrifft einen Endeffektor, insbesondere ein Greifwerkzeug, gemäß dem Oberbegriff von Anspruch 1 sowie ein Verfahren zur Handhabung von Werkstücken gemäß Anspruch 16.

Bei dem in Rede stehenden Endeffektor handelt es sich um ein manipulatorgeführtes Werkzeug, also um ein Werkzeug, das bestimmungsgemäß an einem Manipulator angeordnet, insbesondere dort angeflanscht ist. Bei dem Manipulator kann es sich um Bewegungsapparate jeglicher Art handeln. Regelmäßig handelt es sich bei dem Manipulator um einen Roboter.

Das Werkzeug ist oft als Greifwerkzeug ausgestaltet und findet dann Anwendung bei der Durchführung von Handhabungsaufgaben, die automatisiert geführt durch den Manipulator ablaufen. Dabei stellt die Handhabung von biegeschlaffen Werkstücken wie Faserhalbzeugen o. dgl. besondere Anforderungen an das Greifwerkzeug. Die Handhabung solcher Faserhalbzeuge spielt bei der Herstellung von Faserverbundbauteilen eine wichtige Rolle. Solche Faserverbundbauteile werden zunehmend in der Flugzeugindustrie eingesetzt, um Strukturbauteile wie Rumpfschalen mit geringem Gewicht und guten mechanischen Eigenschaften bereitstellen zu können (DE 10 2007 003 275 A1).

Vorliegend steht der Einsatz des in Rede stehenden Greifwerkzeugs im Rahmen von Handhabungsaufgaben im Vordergrund, bei denen ein obiges Faserhalbzeug in einer Werkzeugform abgelegt oder an eine Werkzeugform angelegt wird. Dabei kommt dem Greifwerkzeug regelmäßig nicht nur eine Transportfunktion, sondern auch eine Drapierfunktion zu. Vor dem Ab- bzw. Anlegen des Werkstücks wird in einem Drapierschritt dafür gesorgt, dass die Werkstückoberfläche an die Werkzeugoberfläche angepasst wird.

Ein bekanntes Greifwerkzeug (DE 101 52 232 A1) ist mit einem Träger für eine Werkzeuganordnung, hier eine Greifanordnung, ausgestattet, durch die ein haltender Eingriff mit dem zu greifenden Werkstück herstellbar ist. Die Greifanordnung umfasst eine Anzahl von Sauggreifern, die jeweils mit einem Stellantrieb ausgestattet sind und so unabhängig voneinander ausgerichtet werden können.

Die Tatsache, dass jeder Sauggreifer frei von den übrigen Sauggreifern verstellbar ist, führt zwar theoretisch zu einer hohen Flexibilität beim Drapieren des Werkstücks. Allerdings ergeben sich hier Herausforderungen in antriebstechnischer und steuerungstechnischer Hinsicht, insbesondere wenn es darum geht, das Werkzeug auf gebogene oder sogar sphärische Werkstückoberflächen einzustellen.

Ein weiterer bekannter Endeffektor (DE 42 10 024 A1) zeigt einen verformbaren Träger für Sauggreifer. Für die Verformung des Trägers ist eine Anordnung aus Kurzhubzylindern vorgesehen, deren Kolbenstangen auf den Träger einwirken.

Der Erfindung liegt das Problem zugrunde, das bekannte Werkzeug für einen Manipulator derart auszugestalten und weiterzubilden, dass es mit einfachen konstruktiven und steuerungstechnischen Mitteln in einem weiten Bereich auf beliebige Werkstückoberflächen ausgerichtet werden kann.

Das obige Problem wird bei einem Werkzeug gemäß dem Oberbegriff von Anspruch 1 durch die Merkmale des kennzeichnenden Teils von Anspruch 1 gelöst.

Wesentlich ist die grundsätzliche Überlegung, die Werkzeuganordnung an einem Träger anzuordnen, der mittels einer Stellanordnung gezielt verformbar ist. Es ist erkannt worden, dass durch diese gezielte Verformung des Trägers auch eine gezielte Ausrichtung der Werkzeuganordnung im Raum erreichbar ist. Die Verformung des Trägers wird auf die Werkzeuganordnung übertragen.

Bei der besonders bevorzugten Ausgestaltung des Werkzeugs als Greifwerkzeug gemäß Anspruch 2 kann die obige Ausrichtbarkeit vorteilhaft beim Aufnehmen und beim Ab- bzw. Anlegen von Werkstücken genutzt werden. Die vorschlagsgemäße Lösung lässt sich dann aber auch für das Drapieren von gegriffenen Werkstücken nutzen. Dabei überträgt sich die Verformung des Trägers über die Greifanordnung entsprechend direkt auf das Werkstück.

Bei geeigneter Auslegung der mechanischen Eigenschaften des Trägers lassen sich auch komplizierte Verformungsstrukturen mit einer einfachen Stellanordnung realisieren. Sofern es sich bei dem Träger um eine Trägerplatte handelt, kann auf einfache Weise dafür gesorgt werden, dass sich die Trägerplatte ausschließlich entlang stetiger Verformungskurven verformt, selbst wenn die Stellkräfte nur punktuell auf den Träger wirken. Der Begriff "Trägerplatte" ist vorliegend umfassend zu verstehen. Er umfasst alle im Wesentlichen flächigen Gebilde, unter anderem auch schmale, streifenförmige Träger o. dgl..

Die Stellanordnung ist mit mindestens einem, vorzugsweise mehreren Stellantrieben ausgestattet, die bei der besonders bevorzugten Ausgestaltung gemäß Anspruch 6 über die Oberfläche des Trägers verteilt angeordnet und entsprechend über den Träger gekoppelt sind. Durch eine geeignete Verteilung der Stellantriebe lassen sich wie oben angesprochen umfangreiche Verformungsstrukturen im Träger erzeugen.

Durch die Kopplung der Stellantriebe wird aber nicht nur die Einstellbarkeit unterschiedlicher Verformungsstrukturen des Trägers erleichtert. Vielmehr wird die Gesamtstabilität des Greifwerkzeugs durch diese Kopplung positiv beeinflusst.

Vorzugsweise weist die Werkzeuganordnung mindestens ein Werkzeugelement auf (Anspruch 10), wobei das mindestens eine Werkzeugelement beispielsweise als Bearbeitungselement, als Andrückelement, oder, wie bei den besonders bevorzugten Ausgestaltungen gemäß den Ansprüchen 11 bis 13 vorgeschlagen, als Greifelement ausgestaltet ist. Die weiter vorzugsweise mehreren Greifelemente sind dann vorteilhafterweise über die Oberfläche des Trägers verteilt angeordnet, um deren optimale Ausrichtbarkeit zu garantieren. Interessant dabei ist die Tatsache, dass selbst bei nur punktuell wirkenden Stellantrieben und nur punktuell wirkenden Greifelementen bei geeigneter Auslegung eine Drapierung des gegriffenen Werkstücks auf weitgehend beliebige Freiformflächen möglich ist.

Im Falle mehrerer Werkzeugelemente, insbesondere mehrerer Greifelemente, sorgt die vorschlagsgemäße Lösung für eine mechanische Kopplung der Greifelemente untereinander. Dies äußert sich darin, dass eine Verformung des Trägers im Bereich eines Greifelements regelmäßig einen Einfluß auf die Verformung des Trägers im Bereich eines weiteren Greifelements hat. Im Falle einer Trägerplatte kann diese Kopplung bei geeigneter Auslegung zu einer im Wesentlichen tangentialen Anordnung der Greifelemente bezogen auf eine gemeinsame Verformungskurve führen.

Bei der besonders bevorzugten Ausgestaltung gemäß Anspruch 13 ist es so, dass in einer Projektion senkrecht zu der Oberfläche der Trägerplatte gesehen die Kraftangriffspunkte der Greifelemente an dem Werkstück und die Kraftangriffspunkte der Stellantriebe an der Trägerplatte zumindest zum Teil voneinander beabstandet sind. Hier wird besonders deutlich, dass die Ausrichtung der Werkzeugelemente, insbesondere der Greifelemente, nicht direkt über die Stellbewegungen der Stellanordnung, sondern über die Verformung des Trägers erfolgt.

Das vorschlagsgemäße Werkzeug für einen Manipulator lässt sich gemäß Anspruch 14 auf einfache Weise modular aufbauen, indem zwei oder mehr Träger zu einem Werkzeug kombiniert werden. Hierfür ist es vorzugsweise vorgesehen, dass jedem Träger sowohl eine Werkzeuganordnung als auch eine Stellanordnung zugeordnet ist, so dass die Träger separat voneinander betriebsfähig sind. Um das Verformungsverhalten des resultierenden Werkzeugs dem Verformungsverhalten eines Werkzeugs mit nur einem einzigen Träger anzunähern, ist es hier in besonders bevorzugter Ausgestaltung vorgesehen, dass die einzelnen Träger über mindestens ein insbesondere elastisch verformbares Zwischenelement miteinander gekoppelt sind (Anspruch 15).

Nach einer weiteren Lehre gemäß Anspruch 16, der ebenfalls eigenständige Bedeutung zukommt, wird ein Verfahren zur Handhabung von verformbaren Werkstücken, insbesondere von biegeschlaffen, flächigen Werkstücken, mit einem vorschlagsgemäßen Greifwerkzeug beansprucht.

Bei dem vorschlagsgemäßen Verfahren wird in einem ersten Schritt das jeweils handzuhabende Werkstück von einem Werkstückspeicher gegriffen, wobei in einem zweiten Schritt das gegriffene Werkstück durch eine entsprechende Ansteuerung der Stellanordnung drapiert wird und wobei in einem dritten Schritt das drapierte Werkstück in einer Zielposition an- oder abgelegt wird.

Mit dem vorschlagsgemäßen Verfahren ist erkannt worden, dass die Ausrichtbarkeit des obigen Werkstücksystems nicht nur beim Aufnehmen und beim Ab- bzw. Anlegen, sondern auch beim Drapieren des gegriffenen Werkstücks vorteilhaft ist. Alle Ausführungen, die geeignet sind, das vorschlagsgemäße Verfahren zu beschreiben oder weiterzubilden, darf verwiesen werden.

Im Folgenden wird die Erfindung anhand einer lediglich ein Ausführungsbeispiel darstellenden Zeichnung näher erläutert. In der Zeichnung zeigt
- Fig. 1: a) ein vorschlagsgemäßes Greifwerkzeug, das an einen Manipulator angeflanscht ist und b) das Greifwerkzeug gemäß a) in einer perspektivischen Ansicht schräg von oben,
- Fig. 2: das Greifwerkzeug gemäß Fig. 1 a) im Grundzustand und b) im ausgerichteten Zustand, jeweils in einer Seitenansicht,
- Fig. 3: das Greifwerkzeug gemäß Fig. 1 in einer perspektivischen Ansicht schräg von unten und
- Fig. 4: in schematischer Darstellung jeweils im demontierten Zustand a)-c) ein Träger des Greifwerkzeugs gemäß Fig. 1 bei konvexer Verformung, bei konkaver Verformung und bei einer Freiflächen-Verformung und d) beide Träger des Greifwerkzeugs gemäß Fig. 1 bei einer sphärischen Verformung.

Der vorschlagsgemäße Endeffektor, bei dem es sich um ein manipulatorgeführtes Werkzeug handelt, kann auf beliebige Aufgaben hin ausgelegt sein. Beispiele hierfür sind Greif-, Schleif-, Fräs-, Schneid-, Kleb-, Wärmebehandlungs- oder Messaufgaben. In allen Fällen weist das Werkzeug mindestens einen insbesondere als Trägerplatte ausgestalteten Träger 3, 4 für eine Werkzeuganordnung 5, 6 auf, wobei die Werkzeuganordnung 5, 6 ganz allgemein dem Zusammenwirken mit dem Werkstück 2 dient.

Der in der Zeichnung dargestellte Endeffektor ist als Greifwerkzeug für das manipulatorgeführte Greifen von Werkstücken 2 ausgestaltet. Alle folgenden, auf ein Greifwerkzeug bezogenen Ausführungen gelten für alle anderen Arten hier anwendbarer Arten von Werkzeugen gleichermaßen.

Bei den Werkstücken handelt es sich hier und vorzugsweise um Faserhalbzeuge. Auch dies ist nicht beschränkend zu verstehen. Das vorschlagsgemäße Greifwerkzeug lässt sich auf alle denkbaren insbesondere automatisiert ablaufenden Handhabungsoperationen anwenden.

Das in der Zeichnung dargestellte Greifwerkzeug weist mindestens einen Träger 3, 4, hier und vorzugsweise zwei Träger 3, 4, auf. Grundsätzlich kann eine beliebige Anzahl von Trägern 3, 4 in noch zu erläuternder Weise modular miteinander kombiniert werden.

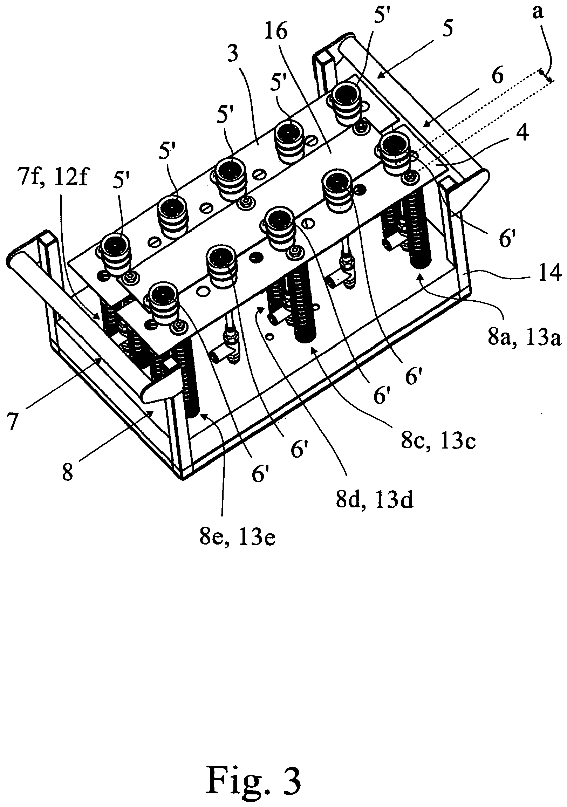

Jedem Träger 3, 4 ist eine Greifanordnung 5, 6 (Fig. 3) zugeordnet, wobei durch die jeweilige Greifanordnung 5, 6 in noch zu erläuternder Weise ein haltender Eingriff mit dem zu greifenden Werkstück 2 herstellbar ist.

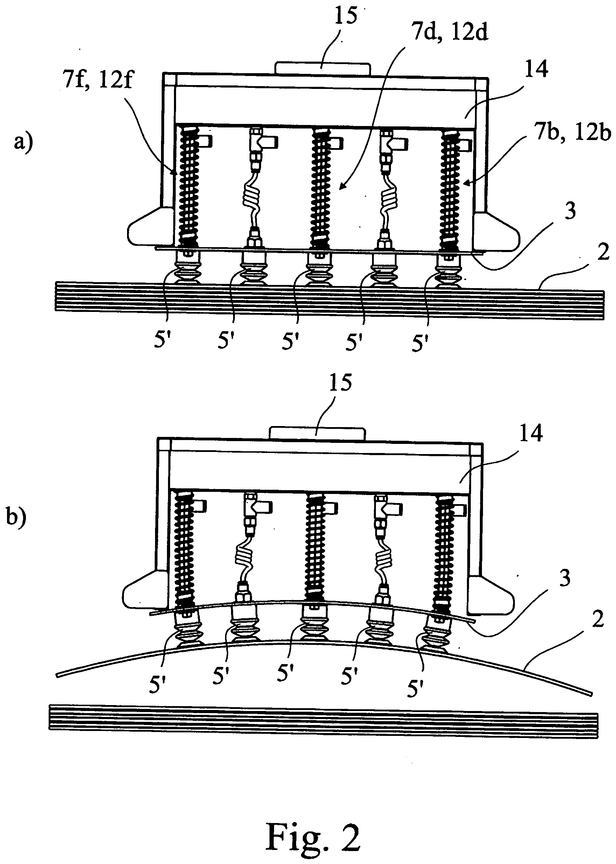

Eine Zusammenschau der Fig. 2a und 2b zeigt, dass die Träger 3, 4 jeweils aus einem verformbaren Material ausgestaltet sind. Grundsätzlich ist es auch denkbar, dass die Träger 3, 4 nur zum Teil aus einem verformbaren Material ausgestaltet sind. Hier und vorzugsweise ist es ferner so, dass die Träger 3, 4 aus einem elastisch verformbaren Material ausgestaltet sind, so dass den Trägern 3, 4 auch die Wirkung einer Rückstellfeder zukommt.

Den Trägern 3, 4 ist jeweils eine Stellanordnung 7, 8 (Fig. 3) zugeordnet, durch die der jeweilige Träger 3, 4 entsprechend verformbar und damit die jeweilige Werkzeuganordnung 5, 6, hier die jeweilige Greifanordnung 5, 6, im Raum ausrichtbar ist. Den ausgerichteten Zustand zeigt Fig. 2b.

Es wurde schon darauf hingewiesen, dass hier und vorzugsweise das zu greifende Werkstück 2 ein verformbares Werkstück 2, weiter vorzugsweise ein biegeschlaffes und flächiges Werkstück 2 ist. Im Rahmen der hier im Vordergrund stehenden Herstellung von Faserverbundbauteilen ist das Werkstück 2 ein Halbzeug aus Faserverbundmaterial. In allen Fällen ist es vorzugsweise so, dass das Werkstück 2 im gegriffenen Zustand mittels der Stellanordnung 7, 8 drapierbar ist.

Grundsätzlich können die Träger 3, 4 aus einem dünnen Blech, insbesondere aus Federstahl, hergestellt sein. Hier und vorzugsweise ist es allerdings vorgesehen, dass die Träger 3, 4 aus einem Kunststoff- oder Gummimaterial gebildet sind. Bei dem dargestellten Ausführungsbeispiel weisen die Träger 3, 4 eine hinreichende Eigenstabilität auf, so dass sie ausschließlich über die Stellanordnung 7, 8 gelagert sind. Denkbar ist aber auch, dass die Träger 3, 4 eine biegeschlaffe Matte, insbesondere eine biegeschlaffe Gummimatte, aufweisen, die jeweils in einem Rahmen eingespannt und mittels einer Stellanordnung 7, 8 verformbar ist.

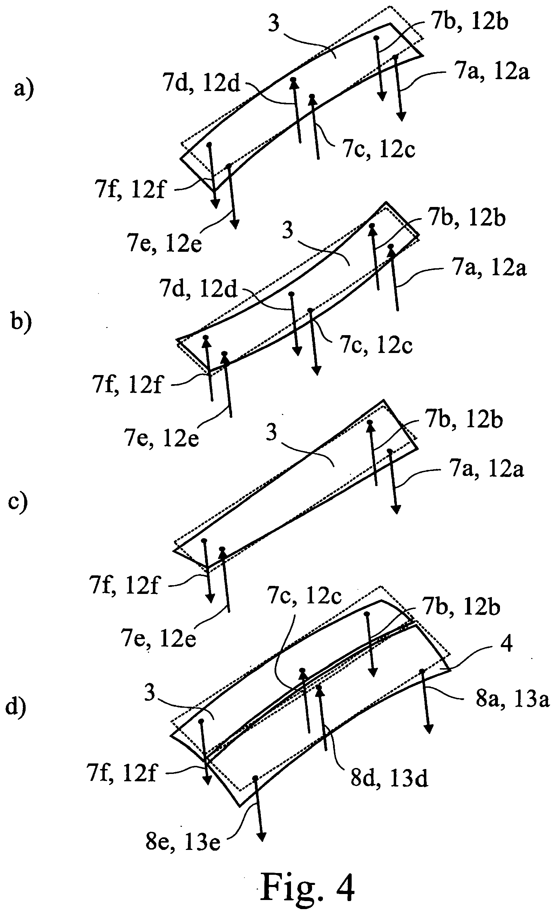

Durch eine geeignete Ansteuerung der Stellanordnung 7, 8 lassen sich weitgehend beliebige Formen des als Trägerplatte ausgestalteten Trägers 3, 4 einstellen. Das lässt sich am besten den schematischen Darstellungen gemäß Fig. 4 entnehmen.

Mit ein und demselben als Trägerplatte ausgestalteten Träger 3, 4 sind konvexe Formen (Fig. 4a), konkave Formen (Fig. 4b) und Freiformen wie verdrillte Flächen (Fig. 4c) erzeugbar. Bei geeigneter Auslegung ist es gemäß Fig. 4d auch denkbar, den als Trägerplatte ausgebildeten Träger 3, 4, hier beide Träger 3, 4 jeweils in eine im Wesentlichen sphärische Form zu verformen (Fig. 4d).

Die obige Verformung der Träger 3, 4 geht hier und vorzugsweise auf punktuelle Kraftwirkungen der Stellanordnungen 7, 8 auf die Träger 3, 4 zurück. Zur Aufbringung dieser Kräfte sind die Stellanordnungen 7, 8 jeweils mit vorzugsweise mehreren insbesondere stufenlos verstellbaren Stellantrieben 7a-f, 8a-f ausgestattet, die von der dem Werkstück 2 abgewandten Seite des jeweiligen Trägers 3, 4 auf den Träger 3, 4 zu dessen Verformung wirken. Grundsätzlich ist es hier auch denkbar, dass nur ein einziger Stellantrieb 7, 8 vorgesehen ist.

Die Fig. 4a-c zeigen für den Träger 3, welche Kraftwirkungen aufzubringen sind, um die jeweils gewünschte Verformung zu erzielen. Die Kraftwirkungen sind in Fig. 4 durch Pfeile dargestellt, die jeweils mit den Bezugszeichen der entsprechenden Stellantriebe 7a-f und der noch zu erläuternden Federelemente 12a-f bezeichnet sind. Wesentlich ist hier, dass für die Verformung entgegengesetzte Kräfte räumlich versetzt auf den Träger 3 wirken müssen. Dies liegt daran, dass die Träger 3, 4 im Wesentlichen ausschließlich mit der jeweiligen Stellanordnung 7, 8 zusammenwirken und sich nicht anderweitig abstützen, wie noch erläutert wird.

Fig. 4d zeigt beide Träger 3, 4, die in noch zu erläuternder Weise miteinander gekoppelt sind, die eine sphärische Verformung erfahren. Hier zeigt sich besonders die mit der vorschlagsgemäßen Lösung erzielbare Flexibilität bei der Werkzeugausrichtung.

Im Sinne einer einfachen und energieeffizienten Ansteuerung der Stellanordnungen 7, 8 ist es vorzugsweise vorgesehen, dass mittels der Stellanordnungen 7, 8 eine zuvor angefahrene Stellung, beispielsweise eine in den Fig. 4a-c dargestellte Stellung, ohne Energiezufuhr haltbar ist. Dies lässt sich beispielsweise dadurch realisieren, dass die Stellantriebe 7a-f, 8a-f selbsthemmend ausgestaltet sind.

Bei dem dargestellten und insoweit bevorzugten Ausführungsbeispiel dagegen sind die Stellanordnungen 7, 8 jeweils als pneumatische Stellanordnung ausgestaltet, die pneumatisch so beschaltet ist, dass die obige selbsthemmende Wirkung entsprechend umgesetzt ist. Dies lässt sich beispielsweise dadurch realisieren, dass in die pneumatische Antriebsleitung des jeweiligen Stellantriebs 7a-f, 8a-f ein Rückschlagventil geschaltet ist, das eine ungewollte Entlüftung des jeweiligen Stellantriebs 7a-f, 8a-f verhindert.

Zur Ansteuerung der Stellantriebe 7a-f, 8a-f ist vorzugsweise ein einzelnes, hier nicht dargestelltes Proportionaldruckregelventil vorgesehen, mit dem der Versorgungsdruck auf beliebige Druckwerte herabgesetzt werden kann. Zur Ansteuerung der Stellantriebe 7a-f, 8a-f wird der Ausgangsdruck des Proportionaldruckregelventils über eine Ventilsteuerung zu dem jeweiligen Stellantrieb 7a-f, 8a-f durchgeschaltet. Sofern zwei Stellantriebe 7a-f, 8a-f mit demselben Druck beaufschlagt werden sollen, so werden diese Stellantriebe 7a-f, 8a-f entsprechend gleichzeitig mit dem Ausgangsdruck des Proportionaldruckregelventils beschaltet. Grundsätzlich kann hier auch jedem Stellantrieb 7a-f, 8a-f ein solches Proportionaldruckregelventil zugeordnet sein, was sich allerdings ungünstig auf das Gewicht des Endeffektors insgesamt auswirkt. Nach der Verstellung des jeweiligen Stellantriebs 7a-f, 8a-f wird der Stellantrieb 7a-f, 8a-f mit einem Rückschlagventil beschaltet, so dass die zuvor angefahrene Stellung ohne Energiezufuhr wie oben erläutert gehalten wird.

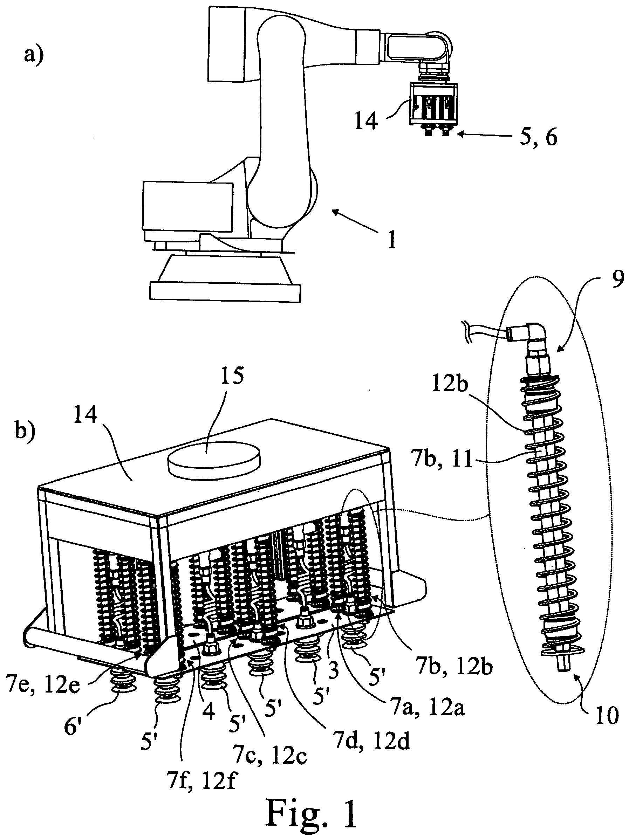

Es lässt sich der Darstellung gemäß Fig. 4 entnehmen, dass die Stellanordnungen 7, 8 für die Verformung der Träger 3, 4 Stellkräfte erzeugen müssen, die zumindest in einer Kraftkomponente im Wesentlichen senkrecht zu der Oberfläche des Trägers 3, 4 wirken. In diesem Sinne ist es vorzugsweise vorgesehen, dass der mindestens eine Stellantrieb 7a-f, 8a-f als Linearantrieb ausgestaltet ist. Ein solcher Linearantrieb 7a-f, 8a-f ist in der Detaildarstellung in Fig. 1b dargestellt.

Der mindestens eine Stellantrieb 7a-f, 8a-f weist zwischen zwei Antriebsanschlüssen 9, 10 einen schlauchartigen Abschnitt 11 auf, der wahlweise mit einem bestimmten Luftdruck beaufschlagbar ist. Bei geeigneter Beaufschlagung folgt eine Längenänderung des schlauchartigen Abschnitts 11 und damit die Erzeugung einer linearen Antriebsbewegung. Solche Linearantriebe sind auch als "pneumatische Muskel" bekannt. Insoweit darf auf die Firmenbroschüre "Fluidic Muscle DMSP/MAS" der Firma Festo AG & Co. KG, 2010/12 verwiesen werden.

Die Stellantriebe 7a-f, 8a-f mit ihren jeweils schlauchartigen Abschnitten sind bei dem dargestellten Ausführungsbeispiel im Wesentlichen senkrecht zu der Oberfläche der Trägerplatte 3, 4 ausgerichtet. Grundsätzlich ist aber jede andere Ausrichtung denkbar, insbesondere wenn ein Umlenkelement o. dgl. zwischen Stellantrieb 7a-f, 8a-f und Trägerplatte 3, 4 zwischengeschaltet ist.

Interessant bei den obigen, muskelartigen Stellantrieben 7a-f, 8a-f ist auch die Tatsache, dass die Stellantriebe 7a-f, 8a-f ohne weiteres eine stufenlose Verstellung ermöglichen, um die Verformung des Trägers 3, 4 entsprechend stufenlos vornehmen zu können. Die stufenlose Verstellung erfolgt vorteilhafterweise ohne "Stick-Slip"-Effekt, wobei mangels Reiblagern auf eine Schmierung verzichtet werden kann.

Anstelle der obigen, von außen auf den Träger 3, 4 wirkenden Stellantriebe 7a-f, 8a-f können grundsätzlich auch Stellantriebe Anwendung finden, die in den Träger 3, 4 integriert sind. Beispielsweise kann die Stellanordnung 7, 8 eine Mehrzahl von Piezoelementen aufweisen, die mit dem Träger 3, 4 zusammenwirken und insbesondere in den Träger 3, 4 integriert sind.

Die Stellantriebe 7a-f, 8a-f können grundsätzlich als bidirektionale Stellantriebe ausgestaltet sein. Im Sinne einer konstruktiv einfachen und damit kostengünstigen Ausgestaltung ist es allerdings vorzugsweise vorgesehen, dass die Stellantriebe 7a-f, 8a-f als unidirektionale Stellantriebe ausgestaltet sind. Um dennoch Kraftwirkungen in entgegengesetzten Richtungen erzeugen zu können, die ja für die oben angesprochene Verformung des Trägers 3, 4 notwendig sind, ist hier und vorzugsweise eine Federanordnung 12, 13 vorgesehen, die parallel und ggf. auch entgegengesetzt zu der Stellanordnung 7, 8 auf den Träger 3, 4 wirkt. In Fig. 4 sind wie oben angedeutet mit den Pfeilen jeweils die Kraftwirkungen angegeben, die sich aus der Kombination von Stellantriebskraft und Federkraft ergeben.

Die Federanordnung 12, 13 weist mindestens ein Federelement 12a-f, 13a-f auf, dessen Kraftwirkungslinie im Wesentlichen auf die Kraftwirkungslinie eines zugeordneten Stellantriebs 7a-f, 8a-f ausgerichtet ist. Im Einzelnen ist es hier so, dass die Stellantriebe 7a-f, 8a-f länglich ausgestaltet sind und dass das dem jeweiligen Stellantrieb 7a-f, 8a-f jeweils zugeordnete Federelement 12a-f, 13a-f als Schraubenfeder ausgestaltet ist, die den jeweiligen Stellantrieb 7a-f, 8a-f aufnimmt.

Für die Ausgestaltung der Werkzeuganordnung 5, 6 sind zahlreiche Möglichkeiten denkbar. Vorzugsweise weist die Werkzeuganordnung 5, 6 mindestens ein Werkzeugelement 5', 6' auf, das insbesondere an der dem Werkstück 2 zugewandten Seite des Trägers 3, 4 angeordnet ist. Hier und vorzugsweise sind mehrere Werkzeugelemente 5', 6' vorgesehen, die über die Oberfläche des Trägers 3, 4 verteilt angeordnet sind. Bei den Werkzeugelementen 5', 6' kann es sich, wie in der Zeichnung dargestellt, um Greifelemente, aber beispielweise auch um Werkzeugelemente zum Schleifen, Fräsen, Schneiden, Kleben, zur Wärmebehandlung, zum Messen o. dgl. handeln.

Bei dem dargestellten und insoweit bevorzugten Ausführungsbeispiel weist die Greifanordnung 5, 6 insgesamt fünf Greifelemente 5', 6' auf, die hier und vorzugsweise an der dem zu greifenden Werkstück 2 zugewandten Seite des Trägers 3, 4 angeordnet sind. Diese mehreren Greifelemente 5', 6' sind über die Oberfläche des Trägers 3, 4 verteilt, so dass sich die vorschlagsgemäße Ausrichtung der Greifanordnung 5, 6 durch die Verformung des Trägers 3, 4 bewerkstelligen lässt.

Für die Realisierung der Greifelemente 5', 6' sind ebenfalls zahlreiche Varianten denkbar. Beispielsweise können die Greifelemente 5', 6' als Zangengreifer, Nadelgreifer, Gefriergreifer o. dgl. ausgestaltet sein. Hier und vorzugsweise ist die Greifanordnung 5, 6 allerdings als pneumatische Greifanordnung ausgestaltet, wobei die Greifelemente 5', 6' entsprechend als pneumatische Greifelemente, hier und vorzugsweise als Sauggreifelemente, ausgestaltet sind.

In konstruktiver Hinsicht ist das vorschlagsgemäße Greifwerkzeug besonders interessant, da die Greifelemente 5', 6' weitgehend beliebig an dem jeweiligen Träger 3, 4 angeordnet sein können. Es ergibt sich aus der Darstellung gemäß Fig. 3, dass in einer Projektion senkrecht zu der Oberfläche der Trägerplatte 3, 4 gesehen die Kraftangriffspunkte der Greifelemente 5', 6' an dem zu greifenden Werkstück 2 und die Kraftangriffspunkte der Stellantriebe 7a-f, 8a-f an der Trägerplatte 3, 4 zumindest zum Teil voneinander beabstandet sind. Dieser Abstand ist in Fig. 3 beispielhaft mit dem Bezugszeichen "a" versehen worden.

Ein erwähnenswertes Detail bei der in den Fig. 1 bis 3 dargestellten, konstruktiven Ausgestaltung ist die pneumatische Anbindung der Greifelemente 5', 6'. Hier und vorzugsweise ist es vorgesehen, dass die pneumatische Zuleitung zumindest abschnittsweise spiralförmig ausgebildet ist, um einen durch die Verformung des Trägers 3, 4 eventuell notwendigen Längenausgleich zu erlauben.

Vorteilhaft im Hinblick auf einen modularen Aufbau ist die konstruktive Struktur des in der Zeichnung dargestellten Endeffektors insgesamt. Das Greifwerkzeug ist nämlich mit einem Systemrahmen 14 ausgestattet, der die Träger 3, 4 mit jeweils zugeordneter Werkzeuganordnung 5, 6, hier Greifanordnung 5, 6, und mit jeweils zugeordneter Stellanordnung 7, 8 aufnimmt. Dabei weist hier und vorzugsweise der Systemrahmen 14 eine mechanische und/oder elektrische Schnittstelle 15 zu dem oben beschriebenen Manipulator 1 auf.

Die Darstellung gemäß Fig. 3 zeigt im Einzelnen, dass das vorschlagsgemäße Werkzeug mit Systemrahmen 14 modular erweiterbar ist. Dies geht im Wesentlichen auf die Tatsache zurück, dass wie oben erläutert jedem Träger 3, 4 jeweils eine eigene Werkzeuganordnung 5, 6, hier Greifanordnung 5, 6, und eine eigene Stellanordnung 7, 8 zugeordnet ist.

Vorzugsweise sind mindestens zwei derart ausgestattete Träger 3, 4 vorgesehen, die über mindestens ein insbesondere elastisch verformbares Zwischenelement 16 miteinander gekoppelt sind, wobei das Zwischenelement 16 hier und vorzugsweise als Zwischenplatte ausgestaltet ist. Es ist ohne weiteres denkbar, dass ein Werkzeug mit nicht nur zwei Modulen, sondern drei Modulen ausgestattet wird, wobei jedes Modul aus einem Träger 3, 4, einer dem Träger 3, 4 zugeordneten Werkzeuganordnung 5, 6, hier Greifanordnung 5, 6 und einer dem Träger 3, 4 zugeordneten Stellanordnung 7, 8 aufweist. Die Module sind jeweils, wie oben angesprochen, über mindestens ein insbesondere elastisch verformbares Zwischenelement 16 miteinander gekoppelt.

Eine Zusammenschau der Fig. 2 und 3 zeigt, dass die Träger 3, 4 nur über die Stellanordnung 7, 8 am Systemrahmen 14 angeordnet sind und im Übrigen frei von dem Systemrahmen 14 verstellbar sind. Das führt zu maximalen Freiheitsgraden bei der Verformung der Träger 3, 4. Es kann aber auch vorteilhaft sein, dass sich die Träger 3, 4 selbst am Systemrahmen 14 abstützen. Damit lässt sich ggf. eine besonders hohe mechanische Stabilität für die Greifanordnung 5, 6 gewährleisten.

Nach einer weiteren Lehre, der ebenfalls eigenständige Bedeutung zukommt, wird ein Verfahren zur Handhabung von verformbaren Werkstücken 2, hier und vorzugsweise von biegeschlaffen, flächigen Werkstücken 2, beansprucht, das mittels eines obigen Greifwerkzeugs durchgeführt wird. Das vorschlagsgemäße Verfahren dient vorzugsweise der Handhabung von Faserhalbzeugen im Rahmen der Herstellung von Faserverbundbauteilen.

In einem ersten Schritt wird das jeweils handzuhabende Werkstück 2 aus einem Werkstückspeicher o. dgl. gegriffen. Diese Situation entspricht der in Fig. 2a dargestellten Situation. Dabei ist das Werkstück 2 regelmäßig plan ausgebildet, so dass eine Verformung des Trägers 3, 4 nicht erforderlich ist. In einem zweiten Schritt wird das gegriffene Werkstück 2 durch eine oben beschriebene Ansteuerung der Stellanordnung 7, 8 drapiert, wie in Fig. 2b dargestellt. Das Drapieren geht auf eine oben beschriebene Verformung der Träger 3, 4 mittels der Stellanordnung 7, 8 zurück. Schließlich wird in einem dritten Schritt das drapierte Werkstück 2 in einer Zielposition ab- oder angelegt. Dieser dritte Schritt ist in der Zeichnung nicht dargestellt, da er in erster Linie auf eine Verstellung des Manipulators 1, hier des Roboters 1, zurückgeht.

An dem vorschlagsgemäßen Verfahren zeigt sich besonders deutlich, dass das vorschlagsgemäße Greifwerkzeug eine besonders hohe Einsatzflexibilität mit einfachen konstruktiven Mitteln erlaubt. Auch die Ansteuerung der Stellanordnung 7, 8 lässt sich mit einfachen Mitteln realisieren, indem die Ausrichtung der Greifanordnung 5, 6 in einem Einlernvorgang eingelernt und gespeichert und während des Betriebs entsprechend abgerufen wird. Auf alle Ausführungen zu dem vorschlagsgemäßen Greifwerkzeug, die eine Erläuterung oder Weiterbildung des vorschlagsgemäßen Verfahrens betreffen, darf verwiesen werden.

Aufgrund seines einfachen konstruktiven Aufbaus lässt sich der vorschlagsgemäße Endeffektor mit besonders geringem Gewicht realisieren, was im Rahmen des Einsatzes an einem Manipulator 1 besonders vorteilhaft ist. Die ist insbesondere zutreffend, wenn die oben angesprochenen, muskelartigen Stellantriebe 7a-f, 8a-f Anwendung finden.

Ein Manipulator 1, der mit einem vorschlagsgemäßen Endeffektor, insbesondere mit einem vorschlagsgemäßen Greifwerkzeug, ausgestattet ist, soll auch als solcher beanspruchbar sein. Insoweit darf auf alle obigen Erläuterungen verwiesen werden.

## Patentansprüche

1. Endeffektor, insbesondere Greifwerkzeug, für einen Manipulator (1), wobei der Endeffektor mit einem Werkstück (2) zusammenwirkt, wobei mindestens ein insbesondere als Trägerplatte ausgestalteter Träger (3, 4) für eine Werkzeuganordnung (5, 6) vorgesehen ist und wobei die Werkzeuganordnung (5, 6) dem Zusammenwirken mit dem Werkstück (2) dient,
wobei der Träger (3, 4) zumindest zum Teil aus einem verformbaren Material, insbesondere aus einem elastisch verformbaren Material, ausgestaltet ist und wobei dem Träger (3, 4) eine Stellanordnung (7, 8) zugeordnet ist, durch die der Träger (3, 4) verformbar und damit die Werkzeuganordnung (5, 6) im Raum ausrichtbar ist,
wobei die Stellanordnung (7, 8) mindestens einen insbesondere stufenlos verstellbaren Stellantrieb (7a-f, 8a-f) aufweist, der insbesondere von der dem Werkstück (2) abgewandten Seite des Trägers (3, 4) aus auf den Träger (3, 4) zu dessen Verformung wirkt, wobei der mindestens eine Stellantrieb (7a-f, 8a-f) als Linearantrieb ausgestaltet ist,
**dadurch gekennzeichnet,**
**dass** der mindestens eine Stellantrieb (7a-f, 8a-f) einen schlauchartigen Abschnitt (11) aufweist und dass der schlauchartige Abschnitt (11) mit einem Luftdruck beaufschlagbar ist, der eine Längenänderung des schlauchartigen Abschnitts (11) und damit die Erzeugung einer Antriebsbewegung bewirkt.

2. Endeffektor nach Anspruch 1, **dadurch gekennzeichnet, dass** die Werkzeuganordnung (5, 6) als Greifanordnung ausgestaltet ist, dass durch die Greifanordnung (5, 6) ein haltender Eingriff mit dem Werkstück (2) herstellbar ist und dass durch die Verformung des Trägers (3, 4) die Greifanordnung (5, 6) im Raum ausrichtbar ist.

3. Endeffektor nach Anspruch 2, wobei das Werkstück (2) ein verformbares Werkstück, vorzugsweise ein biegeschlaffes, flächiges Werkstück, weiter vorzugsweise ein Halbzeug aus Faserverbundmaterial, ist, **dadurch gekennzeichnet, dass** das Werkstück (2) im gegriffenen Zustand mittels der Stellanordnung (7, 8) drapierbar ist.

4. Endeffektor nach einem der vorhergehenden Ansprüche, **dadurch gekennzeichnet, dass** der Träger (3, 4) aus einem Kunststoff- oder Gummimaterial gebildet ist, vorzugsweise, dass der Träger (3, 4) eine biegeschlaffe Matte aufweist, die in einem Rahmen eingespannt ist.

5. Endeffektor nach einem der vorhergehenden Ansprüche, **dadurch gekennzeichnet, dass** der Träger (3, 4) als Trägerplatte ausgestaltet ist und mittels der Stellanordnung (7, 8) zumindest abschnittsweise in eine im Wesentlichen konvexe und/oder konkave Form verformbar ist, vorzugsweise, dass die Trägerplatte (3, 4) mittels der Stellanordnung (7, 8) zumindest abschnittsweise in eine im Wesentlichen sphärische Form verformbar ist, weiter vorzugsweise, dass die Trägerplatte (3, 4) mittels der Stellanordnung (7, 8) zumindest abschnittsweise im Wesentlichen in eine Freiform verformbar ist.

6. Endeffektor nach einem der vorhergehenden Ansprüche, **dadurch gekennzeichnet, dass** mehrere Stellantriebe (7a-f, 8a-f) vorgesehen sind, die über die Oberfläche des Trägers (3, 4) verteilt angeordnet sind.

7. Endeffektor nach einem der vorhergehenden Ansprüche, **dadurch gekennzeichnet, dass** mittels der Stellanordnung (7, 8) eine zuvor angefahrene Stellung ohne Energiezufuhr haltbar ist, vorzugsweise, dass die Stellanordnung (7, 8) als pneumatische Stellanordnung ausgestaltet ist und dass die Stellanordnung (7, 8) pneumatisch so beschaltet ist, dass eine zuvor angefahren Stellung ohne Energiezufuhr haltbar ist.

8. Endeffektor nach einem der vorhergehenden Ansprüche, **dadurch gekennzeichnet, dass** der mindestens eine Stellantrieb (7a-f, 8a-f) als unidirektionaler Stellantrieb ausgestaltet ist.

9. Endeffektor nach einem der vorhergehenden Ansprüche, **dadurch gekennzeichnet, dass** mindestens eine Federanordnung (12, 13) vorgesehen ist, die parallel zu der Stellanordnung (7, 8) auf den Träger (3, 4) wirkt, vorzugsweise, dass die Federanordnung (12, 13) mindestens ein Federelement (12a-f, 13a-f) aufweist, dessen Kraftwirkungslinie im Wesentlichen auf die Kraftwirkungslinie eines zugeordneten Stellantriebs (7a-f, 8a-f) ausgerichtet ist, weiter vorzugsweise, dass der mindestens eine Stellantrieb (7a-f, 8a-f) länglich ausgestaltet ist und dass das dem Stellantrieb (7a-f, 8a-f) jeweils zugeordnete Federelement (12a-f, 13a-f) als Schraubenfeder ausgestaltet ist, die den Stellantrieb (7a-f, 8a-f) aufnimmt.

10. Endeffektor nach einem der vorhergehenden Ansprüche, **dadurch gekennzeichnet, dass** die Werkzeuganordnung (5, 6) mindestens ein Werkzeugelement (5', 6') aufweist, das insbesondere an der dem Werkstück (2) zugewandten Seite des Trägers (3, 4) angeordnet ist, vorzugsweise, dass mehrere Werkzeugelemente (5', 6') vorgesehen sind, die über die Oberfläche des Trägers (3, 4) verteilt angeordnet sind.

11. Endeffektor nach Anspruch 2 und ggf. nach einem der Ansprüche 3 bis 10, **dadurch gekennzeichnet, dass** die Greifanordnung (5, 6) mindestens ein Greifelement (5', 6') aufweist, das insbesondere an der dem zu greifenden Werkstück (2) zugewandten Seite des Trägers (3, 4) angeordnet ist, vorzugsweise, dass mehrere Greifelemente (5', 6') vorgesehen sind, die über die Oberfläche des Trägers (3, 4) verteilt angeordnet sind.

12. Endeffektor nach Anspruch 11, **dadurch gekennzeichnet, dass** die Greifanordnung (5, 6) als pneumatische Greifanordnung ausgestaltet ist, vorzugsweise, dass das mindestens eine Greifelement (5', 6') als pneumatisches Greifelement, insbesondere als Sauggreifelement, ausgestaltet ist.

13. Endeffektor nach Anspruch 11, **dadurch gekennzeichnet, dass** in einer Projektion senkrecht zu der Oberfläche der Trägerplatte (3, 4) gesehen die Kraftangriffspunkte der Greifelemente (5', 6') an dem zu greifenden Werkstück (2) und die Kraftangriffspunkte der Stellantriebe (7, 8) an der Trägerplatte (3, 4) zumindest zum Teil von einander beabstandet sind.

14. Endeffektor nach einem der vorhergehenden Ansprüche, **dadurch gekennzeichnet, dass** ein Systemrahmen (14) vorgesehen ist, der den mindestens einen Träger (3, 4) mit zugeordneter Werkzeuganordnung (5, 6) und mit zugeordneter Stellanordnung (7, 8) aufnimmt, vorzugsweise, dass der Systemrahmen (14) eine mechanische und/oder elektrische Schnittstelle (15) zu einem Manipulator (1) aufweist.

15. Endeffektor nach einem der vorhergehenden Ansprüche, **dadurch gekennzeichnet, dass** mindestens zwei Träger (3, 4) mit jeweils zugeordneter Werkzeuganordnung (5, 6) und mit jeweils zugeordneter Stellanordnung (6, 7) vorgesehen sind, vorzugsweise, dass zwei benachbarte Träger (3, 4) über mindestens ein insbesondere elastisch verformbares Zwischenelement (16) miteinander gekoppelt sind, vorzugsweise, dass das Zwischenelement (16) als Zwischenplatte ausgestaltet ist.

16. Verfahren zur Handhabung von verformbaren Werkstücken (2), insbesondere von biegeschlaffen, flächigen Werkstücken (2), mittels eines Endeffektors nach einem der vorhergehenden Ansprüche, wobei in einem ersten Schritt das jeweils handzuhabende Werkstück (2) gegriffen wird, wobei in einem zweiten Schritt das gegriffene Werkstück (2) durch eine entsprechende Ansteuerung der Stellanordnung (7, 8) drapiert wird und wobei in einem dritten Schritt das drapierte Werkstück (2) in einer Zielposition ab- oder angelegt wird.

## Claims

1. End effector, in particular a gripping tool, for a manipulator (1), wherein the end effector interacts with a workpiece (2), wherein at least one carrier (3, 4), configured in particular as a carrier plate, for a tool arrangement (5, 6) is provided, and wherein the tool arrangement (5, 6) serves to interact with the workpiece (2), wherein the carrier (3, 4) is formed at least in part from a deformable material, in particular from an elastically deformable material, and wherein the carrier (3, 4) is assigned an actuating arrangement (7, 8), by way of which the carrier (3, 4) is deformable and thus the tool arrangement (5, 6) is orientable in space wherein the actuating arrangement (7, 8) has at least one, in particular infinitely adjustable, actuator (7a-f, 8a-f) which acts on the carrier (3, 4), in particular from that side of the carrier (3, 4) that is remote from the workpiece (2), in order to deform said carrier (3, 4), wherein the at least one actuator (7a-f, 8a-f) is configured as a linear drive, **characterized in that** at least one actuator (7a-f, 8a-f) has a tubular section (11) and **in that** the tubular section (11) can be subjected to an air pressure which effects a change in length of the tubular section (11) and thus generates an actuating movement.

2. End effector according to Claim 1, **characterized in that** the tool arrangement (5, 6) is configured as a gripping arrangement, **in that** retentive engagement with the workpiece (2) is producible by way of the gripping arrangement (5, 6), and **in that** the gripping arrangement (5, 6) is orientable in space by way of the deformation of the carrier (3, 4).

3. End effector according to claim 2, wherein the workpiece (2) is a deformable workpiece, preferably a flexible, sheet-like workpiece, more preferably a semifinished product made of fiber composite material, **characterized in that** the workpiece (2) is drapable by means of the actuating arrangement (7, 8) in the gripped state.

4. End effector according to one of the preceding claims, **characterized in that** the carrier (3, 4) is formed from a plastics or rubber material, preferably in that the carrier (3, 4) has a flexible mat which is clamped in a frame.

5. End effector according to one of the preceding claims, **characterized in that** the carrier (3, 4) is configured as a carrier plate and is deformable at least sectionally into a substantially convex and/or concave form by means of the actuating arrangement (7, 8), preferably **in that** the carrier plate (3, 4) is deformable at least sectionally into a substantially spherical form by means of the actuating arrangement (7, 8), more preferably **in that** the carrier plate (3, 4) is deformable at least sectionally into a substantially free form by means of the actuating arrangement (7, 8).

6. End effector according to one of the preceding claims, **characterized in that** a plurality of actuators (7a-f, 8a-f) are provided, which are arranged in a manner distributed over the surface of the carrier (3, 4).

7. End effector according to one of the preceding claims, **characterized in that** previously a reached position is maintainable by means of the actuating arrangement (7, 8) without supply of energy, preferably in that the actuating arrangement (7, 8) is configured as a pneumatic actuating arrangement and **in that** the actuating arrangement (7, 8) is pneumatically connected up such that a previously reached position is maintainable without supply of energy.

8. End effector according to one of the preceding claims, **characterized in that** the at least one actuator (7a-f, 8a-f) is configured as a unidirectional actuator.

9. End effector according to one of the preceding claims, **characterized in that** at least one spring arrangement (12, 13) is provided, which acts on the carrier (3, 4) in parallel with the actuating arrangement (7, 8), preferably **in that** the spring arrangement (12, 13) has at least one spring element (12a-f, 13a-f), the line of force action of which is aligned substantially with the line of force action of an associated actuator (7a-f, 8a-f), more preferably **in that** the at least one actuator (7a-f, 8a-f) is configured in an elongate manner and **in that** the spring element (12a-f, 13a-f) respectively assigned to the actuator (7a-f, 8a-f) is configured as a helical spring which accommodates the actuator (7a-f, 8a-f).

10. End effector according to one of the preceding claims, **characterized in that** the tool arrangement (5, 6) has at least one tool element (5', 6') which is arranged in particular on that side of the carrier (3, 4) that faces the workpiece (2), preferably **in that** a plurality of tool elements (5', 6') are provided, which are arranged in a manner distributed over the surface of the carrier (3, 4).

11. End effector according to Claim 2 and optionally according to one of Claims 3 to 10, **characterized in that** the gripping arrangement (5, 6) has at least one gripping element (5', 6') which is arranged in particular on that side of the carrier (3, 4) that faces the workpiece (2) to be gripped, preferably **in that** a plurality of gripping elements (5', 6') are provided, which are arranged in a manner distributed over the surface of the carrier (3, 4).

12. End effector according to Claim 10, **characterized in that** the gripping arrangement (5, 6) is configured as a pneumatic gripping arrangement, preferably **in that** the at least one gripping element (5', 6') is configured as a pneumatic gripping element, in particular as a suction gripping element.

13. End effector according to Claim 11, **characterized in that**, as seen in a projection perpendicular to the surface of the carrier plate (3, 4), the points of force application of the gripping elements (5' 6') on the workpiece (2) to be gripped and the points of force application of the actuators (7, 8) on the carrier plate (3, 4) are at least partially spaced apart from one another.

14. End effector according to one of the preceding claims, **characterized in that** a system frame (14) is provided, which accommodates the at least one carrier (3, 4) having an associated tool arrangement (5, 6) and having an associated actuating arrangement (7, 8), preferably **in that** the system frame (14) has a mechanical and/or electrical interface (15) with a manipulator (1).

15. End effector according to one of the preceding claims, **characterized in that** at least two carriers (3, 4), each having an associated tool arrangement (5, 6) and each having an associated actuating arrangement (6, 7), are provided, preferably **in that** two adjacent carriers (3, 4) are coupled together via at least one, in particular elastically deformable intermediate element (16), preferably **in that** the intermediate element (16) is configured as an intermediate plate.

16. Method for handling deformable workpieces (2), in particular flexible, sheet-like workpieces (2), by means of an end effector according to one of the preceding claims, wherein, in a first step, the workpiece (2) respectively to be handled is gripped, wherein, in a second step, the gripped workpiece (2) is draped by appropriate actuation of the actuating arrangement (7, 8), and wherein, in a third step, the draped workpiece (2) is deposited or placed in a target position.

## Revendications

1. Effecteur terminal, en particulier outil de saisie, pour un manipulateur (1), l'effecteur terminal coopérant avec une pièce (2),
au moins un support (3, 4) configuré en particulier comme plaque de support étant prévu pour un ensemble d'outil (5, 6), l'ensemble d'outil (5, 6) servant à coopérer avec la pièce (2),
le support (3, 4) étant réalisé au moins en partie en un matériau déformable, en particulier en un matériau élastiquement déformable,
un ensemble de réglage (7, 8) par lequel le support (3, 4) peut être déformé pour qu'ainsi l'ensemble d'outil (5, 6) puisse être aligné dans l'espace étant associé au support (3, 4),
l'ensemble de réglage (7, 8) présentant au moins un entraînement de réglage (7a-f, 8a-f) ajustable en particulier de manière progressive, qui agit sur le support (3, 4) en vue de le déformer en particulier par le côté du support (3, 4) non tourné vers la pièce (2),
le ou les entraînements de réglage (7a-f, 8a-f) étant configurés comme entraînements linéaires, **caractérisé en ce que**
le ou les entraînements de réglage (7a-f, 8a-f) présentent une section (11) en forme de tuyau flexible et
**en ce qu'**une pression d'air qui a pour effet une modification de longueur de la section (11) en forme de tuyau flexible et ainsi la création de déplacements d'entraînement peut être appliquée sur la section (11) en forme de tuyau flexible.

2. Effecteur terminal selon la revendication 1, **caractérisé en ce que** l'ensemble d'outil (5, 6) est configuré comme ensemble de saisie, **en ce que** l'ensemble de saisie (5, 6) permet d'établir une saisie de retenue de la pièce (2) et **en ce que** l'ensemble de saisie (5, 6) peut être orienté dans l'espace par déformation du support (3, 4).

3. Effecteur terminal selon la revendication 2, dans lequel la pièce (2) est une pièce déformable, en particulier une pièce plate flexible et de manière plus préférable une ébauche en matériau composite de fibres, **caractérisé en ce que** la pièce (2) peut être drapée au moyen de l'ensemble de réglage (7, 8) lorsqu'elle a été saisie.

4. Effecteur terminal selon l'une des revendications précédentes, **caractérisé en ce que** le support (3, 4) est réalisé en un matériau à base de matière synthétique ou de caoutchouc et de préférence **en ce que** le support (3, 4) présente une natte flexible tendue dans un cadre.

5. Effecteur terminal selon l'une des revendications précédentes, **caractérisé en ce que** le support (3, 4) est configuré comme plaque de support et peut être déformé au moins en partie sous une forme essentiellement convexe et/ou concave au moyen de l'ensemble de réglage (7, 8), de préférence **en ce que** la plaque de support (3, 4) peut être déformée au moins en partie en une forme essentiellement sphérique au moyen de l'ensemble de réglage (7, 8) et de manière plus préférable **en ce que** la plaque de support (3, 4) peut être déformée au moins en partie essentiellement en une forme libre au moyen de l'ensemble de réglage (7, 8).

6. Effecteur terminal selon l'une des revendications précédentes, **caractérisé en ce que** plusieurs entraînements de réglage (7a-f, 8a-f) répartis au-dessus de la surface de support (3, 4) sont prévus.

7. Effecteur terminal selon l'une des revendications précédentes, **caractérisé en ce qu'**une position préalablement prise peut être maintenue au moyen de l'ensemble de réglage (7, 8) sans apport d'énergie, de préférence **en ce que** l'ensemble de réglage (7, 8) est configuré comme ensemble pneumatique de réglage et **en ce que** l'ensemble de réglage (7, 8) est raccordé pneumatiquement de manière à pouvoir maintenir sans apport d'énergie une position prise précédemment.

8. Effecteur terminal selon l'une des revendications précédentes, **caractérisé en ce que** le ou les entraînements de réglage (7a-f, 8a-f) sont configurés comme entraînements de réglage unidirectionnels.

9. Effecteur terminal selon l'une des revendications précédentes, **caractérisé en ce qu'**au moins un ensemble élastique (12, 13) qui agit parallèlement à l'ensemble de réglage (7, 8) sur le support (3, 4) est prévu, de préférence **en ce que** l'ensemble élastique (12, 13) présente au moins un élément élastique (12a-f, 13a-f) dont la ligne d'action de la force est alignée essentiellement sur la ligne d'action de la force de l'entraînement de réglage (7a-f, 8a-f) associé, et de manière encore plus préférable, **en ce que** le ou les entraînements de réglage (7a-f, 8a-f) sont allongés et **en ce que** l'élément élastique (12a-f, 13a-f) associé à chaque entraînement de réglage (7a-f, 8a-f) est configuré comme ressort hélicoïdal qui entoure l'entraînement de réglage (7a-f, 8a-f).

10. Effecteur terminal selon l'une des revendications précédentes, **caractérisé en ce que** l'ensemble d'outil (5, 6) présente au moins un élément d'outil (5', 6') disposé en particulier sur le côté du support (3, 4) tourné vers la pièce (2) et de préférence **en ce que** plusieurs éléments d'outil (5', 6') répartis au-dessus de la surface du support (3, 4) sont prévus.

11. Effecteur terminal selon l'une des revendications précédentes, caractérisé selon la revendication 2 et éventuellement selon l'une des revendications 3 à 10, **caractérisé en ce que** l'ensemble de saisie (5, 6) présente au moins un élément de saisie (5', 6') disposé en particulier sur le côté du support (3, 4) tourné vers la pièce (2) à saisir et de préférence **en ce que** plusieurs éléments de saisie (5', 6') répartis au-dessus de la surface du support (3, 4) sont prévus.

12. Effecteur terminal selon la revendication 11, **caractérisé en ce que** l'ensemble de saisie (5, 6) est configuré comme ensemble de saisie pneumatique et de préférence **en ce que** le ou les éléments de saisie (5', 6') sont configurés comme éléments de saisie pneumatique et en particulier comme éléments de saisie aspirants.

13. Effecteur terminal selon l'une des revendications précédentes, **caractérisé en ce que** dans une projection perpendiculaire à la surface de la plaque de support (3, 4), le point d'action de la force des éléments de saisie (5', 6') sur la pièce (2) à saisir et au moins certains des points d'action de la force des entraînements de réglage (7, 8) sur la plaque de support (3, 4) sont maintenus à distance mutuelle.

14. Effecteur terminal selon l'une des revendications précédentes, **caractérisé en ce qu'**un bâti de système (14) qui reprend le ou les supports (3, 4) et les ensembles d'outil (5, 6) et les ensembles de réglage (7, 8) qui leur sont associés sont prévus et **en ce que** le bâti du système (14) présente une interface mécanique et/ou électrique (15) avec un manipulateur (1).

15. Effecteur terminal selon l'une des revendications précédentes, **caractérisé en ce qu'**au moins deux supports (3, 4) présentant chacun un ensemble d'outil (5, 6) associé et un ensemble de réglage (6, 7) associé sont prévus et de préférence **en ce que** deux supports voisins (3, 4) sont accouplés l'un à l'autre par l'intermédiaire d'au moins un élément intermédiaire (16) en particulier élastiquement déformable et de préférence **en ce que** l'élément intermédiaire (16) est configuré comme plaque intermédiaire.

16. Procédé de manipulation de pièces (2) déformables, en particulier de pièces (2) plates et flexibles au moyen d'un effecteur terminal selon l'une des revendications précédentes, dans lequel dans une première étape, la pièce (2) à manipuler est saisie et dans une deuxième étape, la pièce (2) saisie est drapée par une commande appropriée de l'ensemble de réglage (7, 8), la pièce (2) drapée étant posée ou placée en une position cible dans une troisième étape.
